(19)

Europäisches Patentamt

European Patent Office

Office européen des brevets

(11) **EP 2 863 296 A1**

(12) **EUROPEAN PATENT APPLICATION**

(43) Date of publication:
22.04.2015 Bulletin 2015/17

(51) Int Cl.:
*G06F 3/044* *(2006.01)*    *G06F 3/0354* *(2013.01)*

(21) Application number: 14170648.1

(22) Date of filing: 30.05.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 21.10.2013 KR 20130125290

(71) Applicant: **Samsung Electronics Co., Ltd Gyeonggi-do 443-742 (KR)**

(72) Inventors:
• **Cho, Eun-Il**
  **Gyeonggi-do (KR)**
• **Park, Han-jin**
  **Gyeonggi-do (KR)**
• **Yoo, Jun-mo**
  **Gyeonggi-do (KR)**
• **Park, Kil-soo**
  **Gyeonggi-do (KR)**

(74) Representative: **Appleyard Lees**
  **15 Clare Road**
  **Halifax HX1 2HY (GB)**

(54) **Input device for touch screen and display apparatus with touch screen**

(57)    An input device for a display screen is disclosed. The input device includes a plurality of conductive members which contact or approach the touch screen and provide various electrostatic capacitances. The conductive member includes a shock absorber at a contact end portion.

FIG. 5

EP 2 863 296 A1

# Description

## CROSS-REFERENCE TO RELATED APPLICATION

This application claims priority from Korean Patent Application No. 10-2013-0125290, filed on October 21, 2013 in the Korean Intellectual Property Office, the disclosure of which is incorporated herein by reference, in its entirety.

## BACKGROUND

### Technical Field

Apparatuses and methods consistent with the exemplary embodiments relate to an input device for a touch screen and a display apparatus with the touch screen. More particularly, the exemplary embodiments relate to a multifunctional input device for a touch screen capable of selectively providing various electrostatic capacities, and a display apparatus to which the multifunctional input device is applicable.

### Description of the Related Art

A mobile display apparatus such as a Smart phone employs various input devices. Among these input devices is a touch screen which senses a user's touch through a touch sensor provided in a display panel and recognizes the touch as an input.

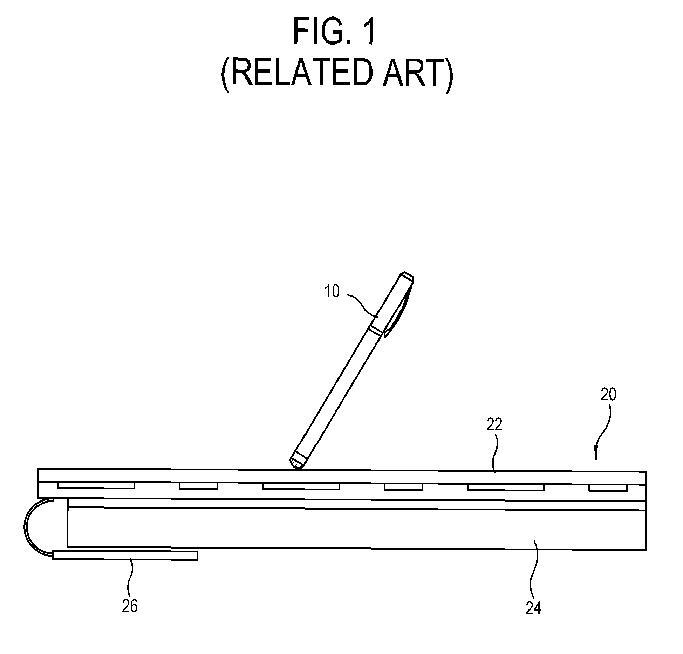

FIG. 1 shows a structure of a touch screen 20 of the related art. The touch screen 20 includes a display panel 24 for displaying various images, a touch sensor 22 provided in the display panel 24, and a touch controller 26 for recognizing a value input to the touch sensor 22.

The touch screen 20 senses pressure or electrostatic capacitance applied by a finger and processes the pressure or electrostatic capacitance as an input. However, when the input is performed by a finger, the touch screen may be contaminated with a fingerprint or the like foreign materials. Accordingly, an input device 10 shaped like a pen has been used as shown in FIG. 1.

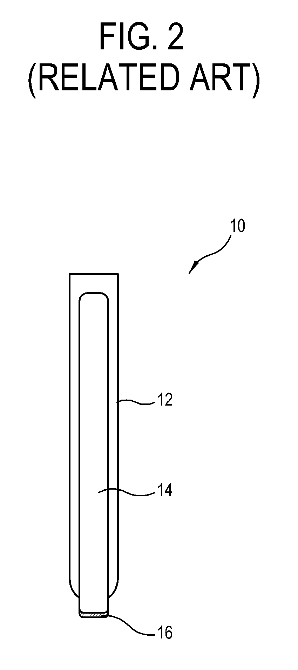

FIG. 2 shows an example of a input pen 10 of the related art for the touch screen. The input pen 10 includes a single conductive body 14 made of a conductive material, a supporter 12 surrounding the conductive body 14, and a shock absorber 16 provided at an end portion of the conductive body 14.

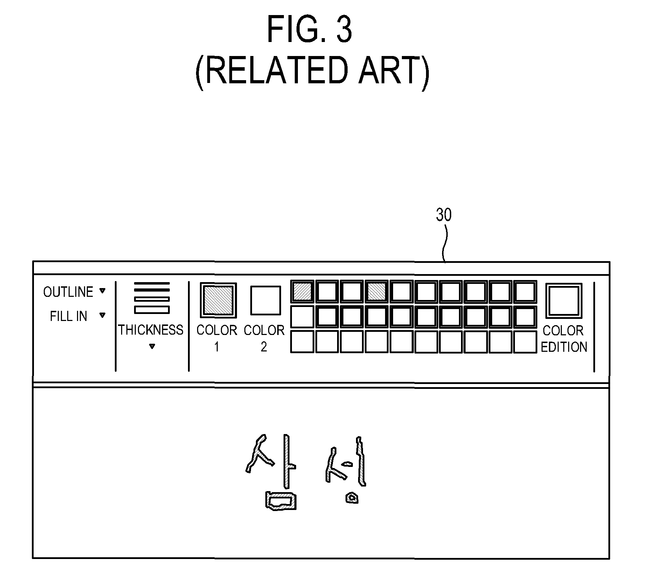

However, the input pen 10 shown in FIG. 2 is inconvenient since its functions have to be selected and changed one by one in an application, as shown in FIG. 3, in order to change color, change thickness and select an eraser.

## SUMMARY

One or more exemplary embodiments may provide an input device for a touch screen, capable of providing various functions.

Another exemplary embodiment may provide a display apparatus to which an input device for a touch screen having a variety of stress is applied.

According to an aspect of one exemplary embodiment, there is provided an input device for a touch screen, including, a plurality of conductive members configured to contact or approach the touch screen and offer various electrostatic capacitances.

The conductive member may include a shock absorber at an end contact portion thereof.

The plurality of conductive members may respectively include shock absorbers having different thicknesses.

The plurality of conductive members may respectively include the contact end portions having different surface areas.

The various offered electrostatic capacitances may correspond to at least one of a display pattern color, a display pattern thickness, an application tool, a size of a display screen and an application implementing function.

The input device may further include an accommodator configured to accommodate the plurality of conductive members; and a presser configured to allow one from among the plurality of conductive members to selectively protrude from the accommodator.

The plurality of conductive members may include one stick-shaped conductive member; and at least one cylindrical conductive member coupled to be movable in a straight manner with respect to the stick.

According to an aspect of another exemplary embodiment, there is provided an input device for a touch screen, including a conductive member configured to approach or contact the touch screen and offers an electrostatic capacitance; a barrel configured to accommodate the conductive member; a shock absorber which is provided at one end portion of the barrel; and a moving portion configured to allow the conductive member accommodated in the barrel to approach or move back from a shock absorber.

The electrostatic capacitance may be varied depending on a change in distance between the conductive member and the shock absorber and offered to the touch screen, and wherein the various electrostatic capacitances offered to the touch screen may correspond to at least one of a display pattern color, a display pattern thickness, an application tool, a display screen size and an application implementing function.

The moving portion may include a screw portion.

According to an aspect of another exemplary embodiment, there is provided a display apparatus including a touch screen which includes a display panel to display an image, and a sensor provided in the display panel and configured to sense an electrostatic capacitance; an input device configured to approach or contact the touch screen and selectively offer various electrostatic capacitances; an image processor configured to process an image to be displayed on the display panel; and a controller configured to recognize and display inputs different corresponding to various electrostatic capacitances offered by the input device.

An aspect of an exemplary embodiment may provide an input device for a touch screen, including: a plurality of conductive members configured to contact or approach the touch screen and provide various electrostatic capacitances; and a barrel configured to accommodate the conductive members, wherein the conductive members are each configured to include a shock absorber at a contact end portion thereof

The shock absorbers may be configured to protrude from an end of the barrel.

The shock absorbers may be configured to have different thicknesses.

The shock absorbers may be configured to have different surface areas.

The various offered electrostatic capacitances correspond to at least one of a display pattern color, a display pattern thickness, an application tool, a display screen size and an application implementing function.

BRIEF DESCRIPTION OF THE DRAWINGS

The above and/or other aspects will become apparent and more readily appreciated from the following description of exemplary embodiments, taken in conjunction with the accompanying drawings, in which:

FIG. 1 shows a structure of a touch screen of the related art;
FIG. 2 shows a structure of an input device for the touch screen of the related art;
FIG. 3 shows an application for changing a pen thickness, a pen color and a function of the device for the touch screen of the related art;
FIG. 4 is a block diagram a display apparatus according to an exemplary embodiment;
FIG. 5 is a view showing a structure of an input device for a touch screen according to a first exemplary embodiment;
FIG. 6 is a view schematically showing a structure of a conductive member in FIG. 5;
FIG. 7 is a view showing a structure of an input device for a touch screen according to a second exemplary embodiment;
FIG. 8 is a view schematically showing a structure of a conductive member in FIG. 7;
FIGs. 9 and 10 are views showing a structure of an input device for a touch screen according to a third exemplary embodiment; and
FIGs. 11 and 12 are views showing a structure of an input device for a touch screen according to a fourth exemplary embodiment.

DETAILED DESCRIPTION OF THE EXEMPLARY EMBODIMENTS

Below, exemplary embodiments will be described in detail with reference to the accompanying drawings. The following only describe configurations directly related to the exemplary embodiments, and the descriptions of the other configurations will be omitted. However, it will be understood that the omitted configurations might not be unnecessary in implementing an apparatus or system to which the exemplary embodiments are applied. Further, like numerals refer to like elements throughout.

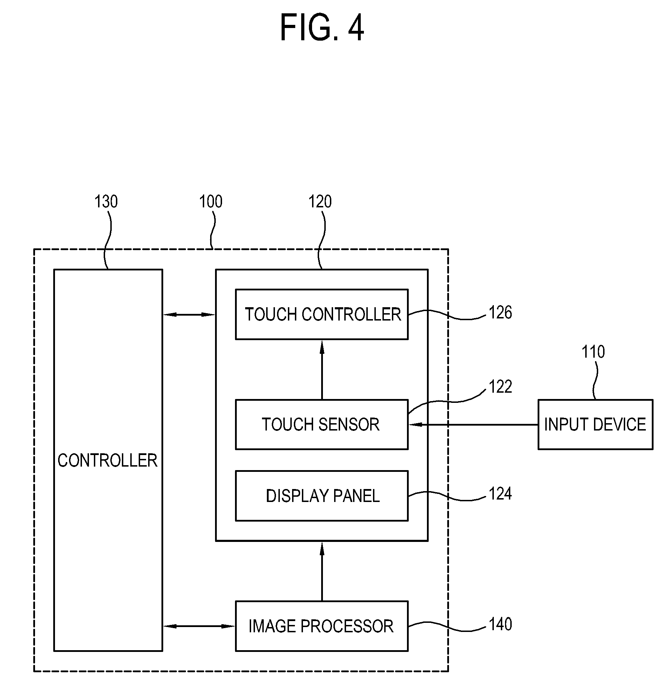

FIG. 4 is a block diagram a display apparatus 100 according to an exemplary embodiment.

Referring to FIG. 4, the display apparatus 100 includes a video receiver (not shown) including a tuner, a communicator (not shown) performing communication through a network, a storage (not shown), an audio processor (not shown), and other elements omitted for convenience.

Also, the display apparatus 100 according to an exemplary embodiment may include a set-top box. In this case, a video signal supplied from an external video source (not shown) can be processed in the set-top box so as to be displayed on the display apparatus. Here, the display apparatus may be a television (TV) or a monitor.

As shown in FIG. 4, the display apparatus 100 according to an exemplary embodiment includes a touch screen 120, an input device 110 approaching or contacting the touch screen 120 and selectively providing different electrostatic capacitances, an image processor 140 processing an image, and a controller 130 recognizing and displaying different inputs based on different electrostatic capacitances provided by the input device 110.

The touch screen 120 includes a display panel 124 displaying an image, a touch sensor 122 arranged in the display panel 124 and sensing the electrostatic capacitances, and a touch controller 126 recognizing the electrostatic capacitance input from the touch sensor 122.

The display panel 124 visually displays an image processed by the image processor 140.

The display panel 124 may be achieved by various panels without limitation, such as liquid crystal, plasma, a light-emitting diode, an organic light-emitting diode, a surface-conduction electron-emitter, a carbon nanotube, a nano-crystal, etc.

The display panel 124 may include an additional element in accordance with its type of panel. For example, in response to the display panel 124 being a liquid crystal display panel, the panel may include a backlight unit (not shown) for emitting light, and a panel driving substrate (not shown) for driving the display panel 124.

The touch sensor 122 includes an electrostatic capacitive sensor arranged on the display panel 124, and detects coordinates where a voltage drop occurs in response to a finger or a conductor contacting or approaching the touch sensor 122. The touch sensor 122 may include transparent electrodes arranged in the form of a matrix on the display panel, and an electrostatic capacitive sensing circuit even though its structure is not separately illustrated.

The touch controller 126 recognizes and outputs a position where the quantity of electric charges is changed by the conductive input device 110, and a changed quantity. The touch controller 126 may be implemented as a program logic controller (PLC), a microcomputer, etc.

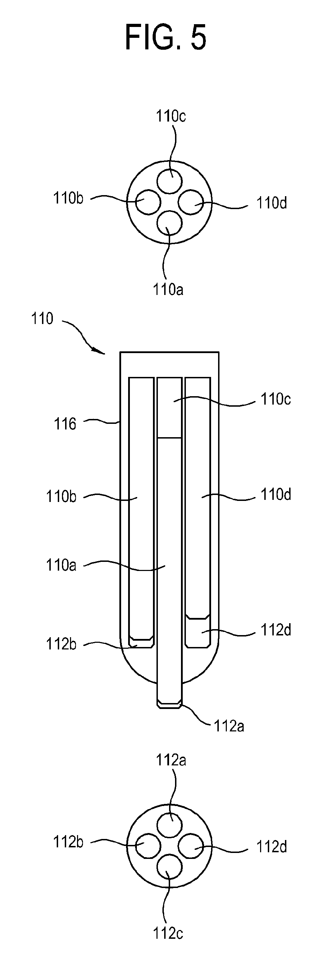

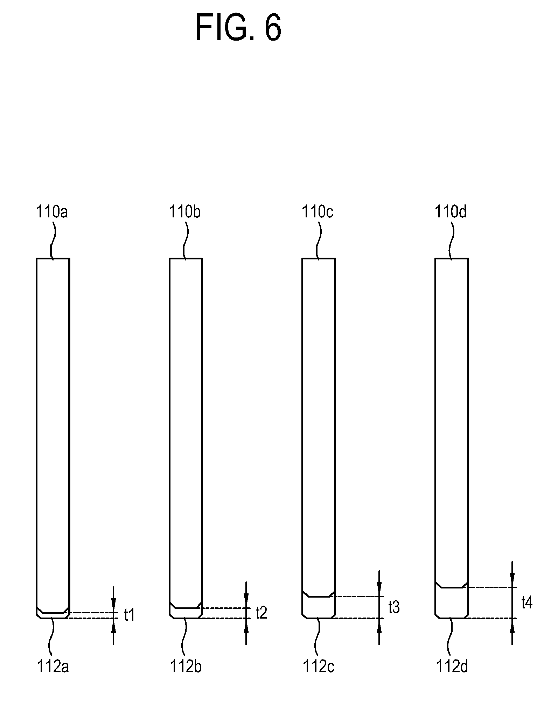

Referring to FIGs. 5 and 6, the input device 110 may be formed by inserting a plurality of conductive members 110a, 110b, 110c and 110d in an accommodator 116, such as a barrel. For simplicity, FIG. 5 excludes a pressing unit (not shown) and a spring (not shown) which are for selecting one from among the plurality of conductive members 110a, 110b, 110c and 110d to partially protrude from the accommodator 116. However, the input device 110 can have any structure as long as it is similar to the structure of selecting and pushing down one pen, like a multi-color pen. The accommodator 116 may be made of a non-conductive material such as plastics, ceramic and glass.

The plurality of conductive members 110a, 110b, 110c and 110d contacts or approaches the touch screen 120 and changes an electrostatic capacitance, i.e., the quantity of electric charges. The contact and approach between the touch screen 120 and the respective conductive members 110a, 110b, 110c and 110d may provide different electrostatic capacities. That is, the plurality of conductive members 110a, 110b, 110c and 110d are different from one another in changing the quantity of electric charges in response to contacting or approaching the touch screen 120. The plurality of conductive members 110a, 110b, 110c and 110d respectively include the shock absorbers 112a, 112b, 112c and 112d at end portions thereof. The shock absorbers 112a, 112b, 112c and 112d may have a predetermined elasticity to prevent the touch screen 120 from a scratch or contamination, but are not limited thereto. As necessary, the shock absorbers may have no elasticity. The shock absorbers 112a, 112b, 112c and 112d may be made of a non-conductive material such as plastics, rubber, etc. In FIG. 5 and 6, four conductive members 110a, 110b, 110c and 110d are illustrated, but is not limited thereto. As necessary, more or less than four conductive members may be provided.

To give different electrostatic capacitances, i.e., to change the quantity of electric charges when the plurality of conductive members 110a, 110b, 110c and 110d respectively contact or approach the touch screen 120, the shock absorber 112a, 112b, 112c and 112d may have different thicknesses t1, t2, t3 and t4 as shown in FIGs. 5 and 6. That is, in response to the shock absorbers 112a, 112b, 112c and 112d being different in thickness, their distances from the touch screen 120 are also different, thereby changing the quantity of electric charges.

With this structure, the shock absorber 112a, 112b, 112c and 112d may be made of plastics, and like materials that are hardly transformed by a user's pressing force.

The quantity of electric charges Q and the electrostatic capacitance C are defined as follows.

$$Q = CV$$

$$C = eA/d$$

where, A is a cross-section area, d is a distance, e is a dielectric constant, and V represents the voltage.

On the assumption that the end portions have the same cross-section area A, the distance d is varied depending on a difference in thickness among the shock absorber 112a, 112b, 112c and 112d, thereby offering various electrostatic capacitances.

The touch controller 126 detects the changed quantity of electric charges sensed through the touch sensor 122 and transmits the electric changes to the controller 130.

The controller 130 controls the elements of the display apparatus 100. For example, the controller 130 controls the image processor 140, the touch screen 120 and the other elements (not shown). The controller 130 may determine an input pattern of the input device 110 in accordance with changed values of the electrostatic capacitance detected by the touch controller 126. That is, the color and thickness of a display pattern, and the functions, such as a pen, an eraser, a screen zoom-in/out, etc. of the input device may be previously set up and displayed in accordance with the electrostatic capacitances changed by the input device 110. In other words, the controller 130 determines the kind of conductive member currently contacting or approaching the touch screen 120, based on the detected change in the quantity of electrostatic capacitance, and controls the pattern to be displayed or the function to be performed which corresponds to the determined conductive member.

How the display apparatus 100 is going to respond to different inputs may be not limited to a pen color and an eraser function, but may be varied depending on the users. For example, change in the thickness of a pen, change in the function of a pen (e.g., a pen, fill-in, and an eraser), screen zoom-in/out, functions of undo, redo, etc. may be performed in response to different inputs.

Accordingly, it is convenient for a user to choose his/her desired color, thickness, function, or the like, by selecting one from among the plurality of conductive members 110a, 110b, 110c and 110d provided in the input device 110.

The controller 130 determines a certain pattern or function in response to an input received through the input device 110, thereby displaying a certain pattern or performing a certain function in an application. The application may include a word processor, a game, a Web, a picture edition program, etc.

The controller 130 may include application specific integrated circuits (ASICs), digital signal processors (DSPs), digital signal processing devices (DSPDs), programmable logic devices (PLDs), field programmable gate arrays (FPGAs), microcontrollers, microprocessors, etc.

The image processor 140 performs various imaging processes previously set up with respect to a video signal. There is no limit to the kind of processors utilized. For example, the processor may include scaling for zooming in or out in a screen, in accordance with a given resolution, decoding and encoding corresponding to various video formats, de-interlacing, frame refresh rate conversion, noise reduction to improve picture quality, detail enhancement, line scanning, etc. The processors may be performed individually or collectively.

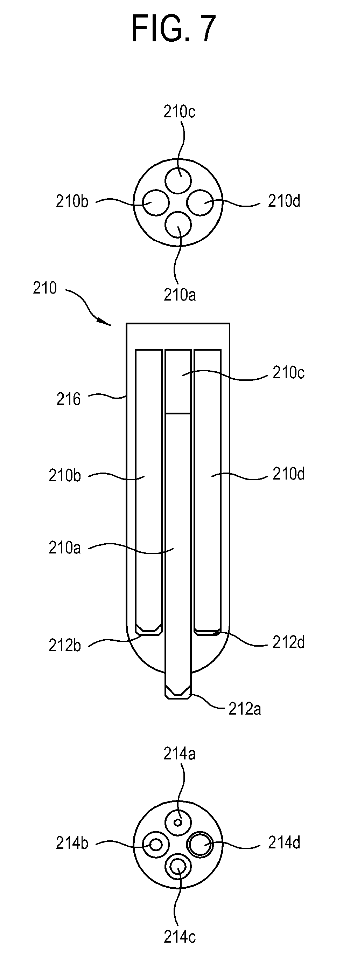

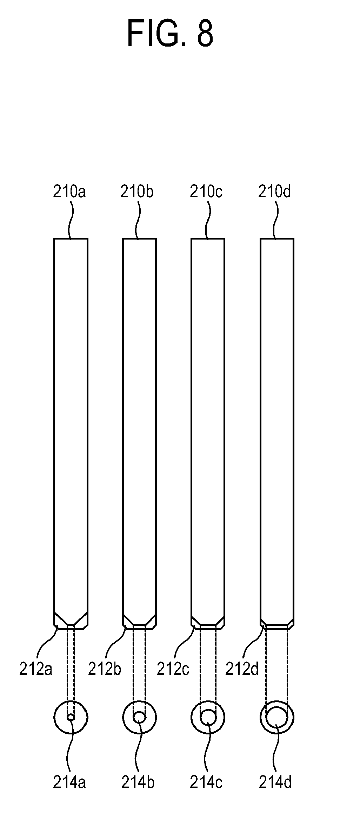

FIGs. 7 and 8 show an input device 210 according to a second exemplary embodiment.

Referring to FIGs. 7 and 8, like the input device 110 according to the first exemplary embodiment, the input device 210 may be formed by inserting a plurality of conductive members 210a, 210b, 210c and 210d in an accommodator 216 such as a barrel. For simplicity, FIG. 7 excludes a pressing unit (not shown) and a spring (not shown) which are for selecting one conductive member from among the plurality of conductive members 210a, 210b, 210c and 210d to partially protrude from the accommodator 216. However, the input device 210 can have any structure as long as it is similar to the structure of selecting and pushing down one pen like a multi-color pen. Here, the accommodator 216 may be made of a non-conductive material such as plastics, ceramic and glass.

The plurality of conductive members 210a, 210b, 210c and 210d contacts or approaches the touch screen 120 and changes an electrostatic capacitance, i.e., the quantity of electric charges. The contact and approach between the touch screen 120 and the respective conductive members 210a, 210b, 210c and 210d may provide different electrostatic capacitances. That is, the plurality of conductive members 210a, 210b, 210c and 210d are different from one another in changing the quantity of electric charges when contacting or approaching the touch screen 120. The plurality of conductive members 210a, 210b, 210c and 10d respectively have end portions 214a, 214b, 214c and 214d different in surface area from one another. The end portions 214a, 214b, 214c and 214d may be provided with shock absorbers 212a, 212b, 212c and 212d having the same thickness so as to prevent the touch screen 120 from scratch or contamination.

With this structure, the shock absorbers 212a, 212b, 212c and 212d may be made of plastics, and like materials that are hardly transformed by a user's pressing force.

In FIG. 7 and 8, four conductive members 210a, 210b, 210c and 210d are illustrated, but is not limited thereto. As necessary, more or less than four conductive members may be provided.

To provide different electrostatic capacitances, i.e., to change the quantity of electric charges when the plurality of conductive members 210a, 210b, 210c and 210d respectively contact or approach the touch screen 120, the end portions 214a, 214b, 214c and 214d may have different surface areas as shown in FIGs. 7 and 8. That is, in response to the end portions 214a, 214b, 214c and 214d being different in surface area, their areas contacting or approaching the touch screen 120 are also different, thereby changing the quantity of electric charges.

The quantity of electric charges Q and the electrostatic capacitance C are defined as follows.

$$Q = CV$$

$$C = eA/d$$

where, A is a cross-section area, d is a distance, e is a dielectric constant and V represents the voltage.

On the assumption that the end portions have the same distance d from the shock absorbers, the distance d is varied depending on difference in cross-section area A, thereby offering various electrostatic capacitances.

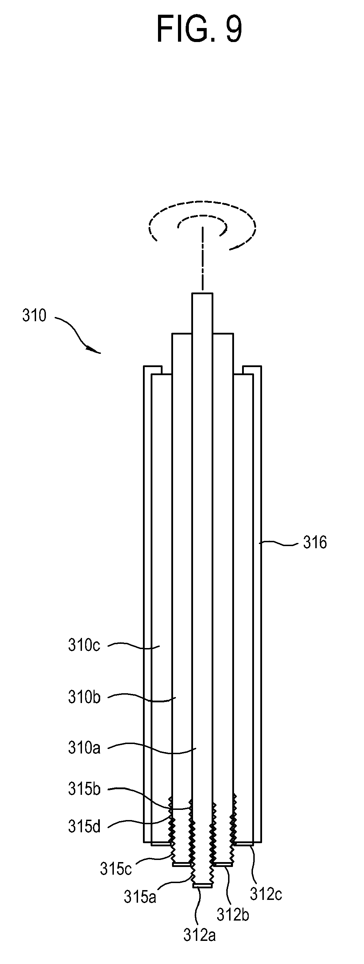

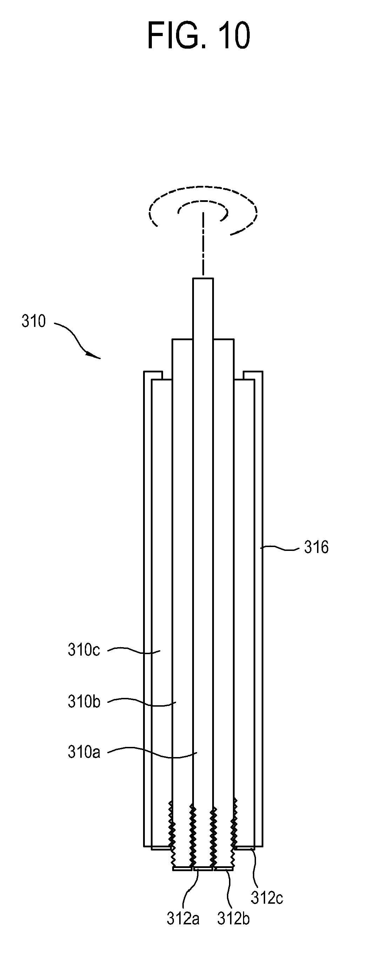

FIG. 9 and 10 shows an input device 310 according to an exemplary embodiment.

As shown in FIG. 9, the input device 310 includes a first conductive member 310a shaped like a stick and placed at the center, a second conductive member 310b shaped like a cylinder and surrounding the stick-shaped first conductive member 310a, a third conductive member 310c shaped like a cylinder and surrounding the cylindrical second conductive member 310b, and an accommodator 316 shaped like a barrel and accommodating and arranging the first to third conductive members 310a, 310b and 310c. The first to third conductive members 310a, 310b and 310c respectively have shock absorbers 312a, 312b and 312c at the end portions thereof.

With this structure, the shock absorbers 312a, 312b and 312c may be made of plastics, and like materials that are hardly transformed by a user's pressing force.

The first to third conductive members 310a, 310b and 310c are coupled to each other through the screw coupling portions 315a and 315b, 315c and 315d and relatively move forward and backward. That is, referring to the input device 310 of FIG. 9, only the first conductive member 310a protrudes at the center and thus the end portion of only the first conductive member 310a contacts or approaches the touch screen 120, thereby having an electrostatic capacitance in proportional to the surface area of the end portion of the first conductive member 310a.

In response to the central first conductive member 310a of FIG. 9 being moved backward in a direction opposite to a forward direction of a screw, the first conductive member 310a and the second conductive member 310b are aligned as shown in FIG. 10. As a result, the end portions of the conductive members 310a and 310b contacting and approaching the touch screen 120 make an enlarged cross-section area to thereby provide an the electrostatic capacitance different from that of FIG. 9.

Likewise, in response to the second conductive member 310b of FIG. 10 being moved backward in the direction opposite to the forward direction of the screw, the first conductive member 310a, the second conductive member 310b and the third conductive member 310c are aligned with one another. As a result, the end portions of the conductive members 310a, 310b and 310c contacting and approaching the touch screen 120 provide a more-enlarged cross-section area to thereby offer the electrostatic capacitance different from those of FIGs. 9 and 10.

$$Q=CV$$

$$C=eA/d$$

where, A is a cross-section area, d is a distance, e is a dielectric constant and V is.

On the assumption that the end portions have the same distance d from the shock absorbers, the distance d is varied depending on difference in cross-section area A, thereby offering various electrostatic capacitances.

According to the third exemplary embodiment shown in FIGs. 9 and 10, the input device is configured to have a relatively simple structure since its volume is smaller than those of the first and second exemplary embodiments.

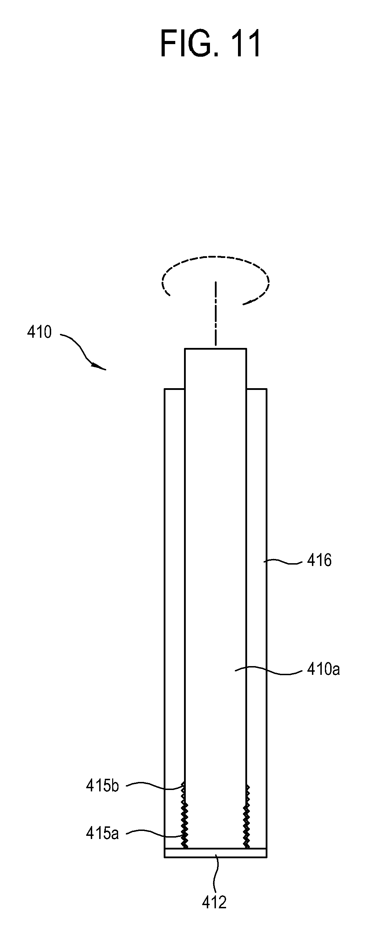

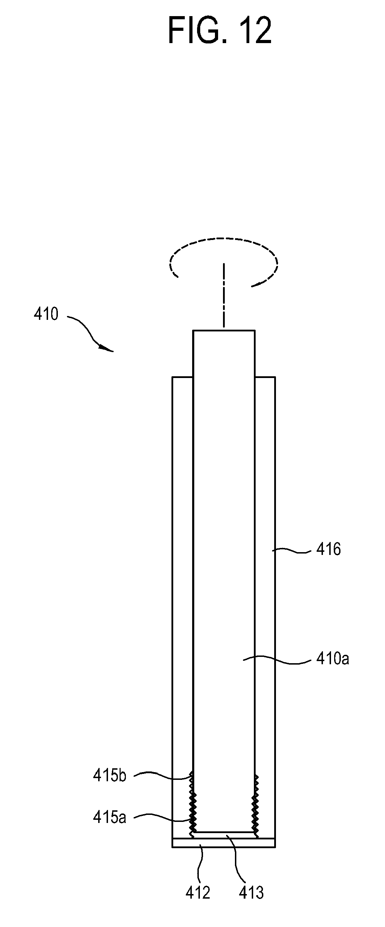

FIGs. 11 and 12 show an input device 410 according to a fourth exemplary embodiment. The input device 410 includes a single conductive member 410a shaped like a stick, and an accommodator 416 shaped like a cylinder and surrounding the conductive member 410a. At an end portion of the input device 410, a shock absorber 412 is provided to prevent the touch screen 120 from scratch or contamination. With this structure, the shock absorbers 412 may be made of plastics, and like materials that are hardly transformed by a user's pressing force.

The accommodator 416 and the stick-shaped conductive member 410a are coupled by screw coupling portion 415a and 415b, so that the conductive member 410a can move forward or backward with respect to the accommodator 416.

In response to the stick-shaped conductive member 410a of FIG. 11 being moved backward in the direction opposite to the forward direction of the screw, a space 413 is formed between the end portion of the stick-shaped conductive member 410a and the shock absorber 412 as shown in FIG. 12, thereby stepwise changing the distance.

$$Q=CV$$

$$C=eA/d$$

where, A is a cross-section area, d is a distance, e is a dielectric constant and V is.

On the assumption that the cross-section area A of the end portion is not changed, the distance d between the shock absorber 412 and the end portion is varied, thereby offering various electrostatic capacitances.

In the third and fourth exemplary embodiments shown in FIGs. 9 to 12, a rotated degree of the conductive member may be visually displayed so that the cross-section area A or distance d determined in accordance with the rotated degrees of the conductive member can be selected.

In the fourth exemplary embodiment shown in FIGs. 11 and 12, only the single conductive member 410a is employed so that the input device can be configured to have a simpler structure and a smaller volume that those of the first and second exemplary embodiments.

According to an exemplary embodiment, a user operates an input device for a touch screen to thereby easily change the thickness, color and function of a pen.

Although a few exemplary embodiments have been shown and described, it will be appreciated by those skilled in the art that changes may be made in these exemplary embodiments. Therefore, the foregoing has to be considered as illustrative only. The scope of the invention is defined in the appended claims and their equivalents. Accordingly, all suitable modification and equivalents may fall within the scope of the invention.

**Claims**

1. An input device for a touch screen, comprising:

   a plurality of conductive members configured to contact or approach the touch screen and provide various electrostatic capacitances.

**2.** The input device according to claim 1, wherein the plurality of conductive members each comprise a shock absorber at a contact end portion thereof.

**3.** The input device according to claim 2, wherein the plurality of conductive members comprising the shock absorbers have different thicknesses.

**4.** The input device according to claim 2, wherein the plurality of conductive members include contact end portions having different surface areas.

**5.** The input device according to claim 1, wherein the various offered electrostatic capacitances correspond to at least one of a display pattern color, a display pattern thickness, an application tool, a display screen size and an application implementing function.

**6.** The input device according to claim 3, further comprising:

an accommodator which accommodates the plurality of conductive members; and
a presser which allows one conducting member from among the plurality of conductive members to selectively protrude from the accommodator.

**7.** The input device according to claim 4, further comprising:

an accommodator which accommodates the plurality of conductive members; and
a presser which allows one conductive member from among the plurality of conductive members to selectively protrude from the accommodator.

**8.** The input device according to claim 4, wherein each of the plurality of conductive members comprises:

one stick-shaped conductive member; and
at least one cylindrical conductive member coupled to be straightly movable with respect to the stick-shaped conductive member.

**9.** The input device according to claim 1, further comprising:

a barrel which accommodates the conductive member; and
a shock absorber which is provided at one end portion of the barrel.

**10.** The input device according to claim 9, wherein the electrostatic capacitance is varied depending on change in distance between the conductive member and the shock absorber and provided to the touch screen, and

wherein the various electrostatic capacitances offered to the touch screen correspond to at least one of a display pattern color, a display pattern thickness, an application tool, a display screen size and an application implementing function.

**11.** The input device according to claim 9, further comprising:

a moving portion which allows the conductive member accommodated in the barrel to approach or move back from a shock absorber.

**12.** The input device according to claim 11, wherein the moving portion comprises a screw portion.

**13.** The input device for a touch screen of claim 9, wherein the shock absorbers are configured to protrude from an end of the barrel.

**14.** A display apparatus comprising:

a touch screen which comprises a display panel configured to display an image, and a sensor provided in the display panel and sensing an electrostatic capacitance;
an input device which approaches or contacts the touch screen and selectively offers various electrostatic capacitances;
an image processor which processes an image to be displayed on the display panel; and
a controller which recognizes different inputs which correspond to various electrostatic capacitances offered by the input device.

**15.** The display apparatus according to claim 14, wherein the different inputs correspond to at least one of a display pattern color, a display pattern thickness, an application tool, a display screen size and an application implementing function.

# FIG. 1
# (RELATED ART)

# FIG. 2
# (RELATED ART)

# FIG. 3
# (RELATED ART)

# FIG. 4

# FIG. 5

# FIG. 6

110a

110b

110c

110d

t1

t2

t3

t4

112a

112b

112c

112d

# FIG. 7

210c

210b          210d

210a

210

216

210c

210b          210d

210a

212b          212d

212a

214a

214b          214d

214c

# FIG. 8

# FIG. 9

# FIG. 10

# FIG. 11

# FIG. 12

Europäisches
Patentamt

European
Patent Office

Office européen
des brevets

## EUROPEAN SEARCH REPORT

Application Number

EP 14 17 0648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/322352 A1 (ZACHUT RAFI [IL] ET AL) 31 December 2009 (2009-12-31) * paragraphs [0009], [0028], [0093], [0145] * | 1-8,14, 15 | INV. G06F3/044 G06F3/0354 |
| A | US 7 785 027 B1 (MCKINLEY PATRICK A [US] ET AL) 31 August 2010 (2010-08-31) * the whole document * | 1-15 | |
| A | WO 2012/123951 A2 (N TRIG LTD [IL]; STERN YUVAL [IL]; GELLER ILAN [IL]; LESHEM YAIR [IL]) 20 September 2012 (2012-09-20) * the whole document * | 1-15 | |

TECHNICAL FIELDS
SEARCHED     (IPC)

G06F

The present search report has been drawn up for all claims

| Place of search | Date of completion of the search | Examiner |
|---|---|---|
| Munich | 29 September 2014 | Kahn, Svenja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 17 0648

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2014

| Patent document cited in search report | | Publication date | Patent family member(s) | | Publication date |
|---|---|---|---|---|---|
| US 2009322352 | A1 | 31-12-2009 | EP | 1922602 A2 | 21-05-2008 |
| | | | JP | 4810573 B2 | 09-11-2011 |
| | | | JP | 2009505209 A | 05-02-2009 |
| | | | US | 2007062852 A1 | 22-03-2007 |
| | | | US | 2009322352 A1 | 31-12-2009 |
| | | | WO | 2007017848 A2 | 15-02-2007 |
| US 7785027 | B1 | 31-08-2010 | US | 7785027 B1 | 31-08-2010 |
| | | | US | 8226315 B1 | 24-07-2012 |
| WO 2012123951 | A2 | 20-09-2012 | US | 2014002422 A1 | 02-01-2014 |
| | | | WO | 2012123951 A2 | 20-09-2012 |

EPO FORM P0459

For more details about this annex : see Official Journal of the European Patent Office, No. 12/82

**EP 2 863 296 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130125290